# EUROPEAN PATENT SPECIFICATION

(11) **EP 1 659 202 B1**
(45) Date of publication and mention of the grant of the patent: **07.05.2008**
(21) Application number: 05110749.8
(22) Date of filing: 15.11.2005
(51) Int. Cl.: D03D 49/02, B23Q 1/28, F16B 2/14

(54) **Height-adjustable support of the warp yarn deflection cylinder in a weaving loom**
Höhenverstellbare Halterung für den Brustbaum einer Webmaschine
Support ajustable en hauteur pour la poitrinière dans les métiers à tisser

(30) Priority: 17.11.2004 IT MI20042211
(43) Date of publication of application: 24.05.2006
(73) Proprietor: Promatech S.p.A., 24020 Colzate (Bergamo) (IT)
(72) Inventor: Gallizioli, Angelo, 24026 Leffe (Bergamo) (IT); Nani, Roberto, 24020 Ranica (Bergamo) (IT)
(74) Representative: Faggioni, Marco

(56) References cited:
- US-A- 4 534 386
- US-A- 5 293 908

## Description

The present invention relates to a height-adjustable support of the warp yarn deflection cylinder of a weaving loom.

As is well-known to skilled people in the field, the general structure of a weaving loom comprises a large cylinder, or warp beam, onto which the supply of warp yarns is wound, off which beam the warp yarns are unwound and rolled out in the weaving area. In this area the warp yarns are opened wide in variously alternate ways to allow for introduction of the weft yarns and formation of the cloth pattern, which cloth is finally wound onto a large end cylinder, or cloth beam.

Arrangement of the two beams normally occurs in the lower area of the loom, so that the warp yarns depart from the beam in an approximately vertical direction to a deflection cylinder, called warp yarn deflection cylinder, which allows to arrange the warp yarns in the substantially horizontal plane where alternate opening and closing of the shed, introduction of the weft yarn and hence cloth formation occur. The cloth thereby formed is then similarly deflected downwards by a take-up roller and finally wound onto the cloth beam.

The warp yarn deflection cylinder defined above, in addition to allowing the warp yarns to be deflected to the weaving plane, also has another important function, i.e. that of maintaining warp yarn tension substantially unchanged during shed opening and closing. During these operations, in fact, the warp yarns leave their rectilinear position and arrange themselves according to an obtuse angle broken line in correspondence of the point where they are in an up or down condition, respectively, due to the action of the healds. In this broken pattern the yarn path is of course longer than the rectilinear position that the yarn takes up when the shed is closed and - in the absence of a suitable device allowing the necessary play, i.e. precisely the warp yarn deflection cylinder - this would determine an unacceptable and continuous variation of the tensioning degree of the warp yarns.

In order to carry out this important function, the warp yarn deflection cylinder is normally hinged to the loom in order to be able to move closer to the take-up roller, in opposition to suitable spring means calibrated so as to balance the load altogether imparted onto the warp yarn deflection cylinder by the warp yarns in a normally tight condition. Whenever, due to shed opening, said load tends to increase over said normal value, the warp yarn deflection cylinder is forced to rotate on its own points of pivotal hinging, compressing said spring means and ultimately cutting short the path followed by the warp yarns so as to compensate the lengthening of said path following shed opening.

The warp yarn deflection cylinder, however, cannot be pivotally hinged directly to the loom, since its position along the height thereof must be adjusted each time according to the cloth being woven, to the dimensions of the warp beam and to other weaving variables, and possibly also during the weaving itself according to the progressive emptying of the warp beam. According to a solution by now widely adopted in the art, the warp yarn deflection cylinder is hence hinged to a sturdy mobile support, against which the above said spring means also abut, and such support is hence fixed to the loom so as to allow height adjustment and locking thereof in the desired position. Very briefly, said mobile support normally consists of at least two shelves, vertically slidable along suitable guides provided along the two loom shoulders and possibly connected by crossbars, to which the warp yarn deflection cylinder is hinged. Intermediate support of said cylinder, fixed to the crossbars, can be provided in case the warp yarn deflection cylinder, due to its size or to the loom width, is unable to exhibit sufficient flexural rigidity.

In order to adjust the height position of said shelves, and hence of the warp yarn deflection cylinder hinged thereto, the use of screw/nut couplings (normal ones or ball recirculation ones) is by now generally widespread, and has been for some time, the screw being arranged along the loom shoulder and the nut being integral with the shelf.

In order to determine instead the fixing of said shelves to the loom, after carrying out adjustment of the position thereof at the desired height, it has constantly been adopted the solution of tightening the rear vertical wall of the shelves and the adjacent vertical wall of the corresponding guides having been formed on the loom shoulders, said guides being provided with an undercut. Such tightening is accomplished by placing, between each shelf and the corresponding guide, a mobile opposition element, whose position with respect to the shelf is adjustable thanks to screw control means, to determine locking of the shelf with respect to the guide.

Known locking systems differ from each other, as well as in the form and arrangement of the opposition element, also and essentially in the tightening direction of the shelves and in the axis orientation of the screw control means. In a first more conventional system, the mobile opposition element consists of a simple block introduced in the guide having an undercut, with which block the shaft of a bolt engages, which bolt also passes through a suitable shelf slot. By tightening said bolt, the shelf is tightened against the outer wall of the corresponding guide, whereas the opposition element is drawn against the inner wall of the same. The tightening direction of the shelf is hence moving closer to the guide, whereas the axis of the screw control means is perpendicular to the guide and hence substantially horizontal. An example of such a first type of locking system is disclosed in US-4 534 386.

In a second fixing system, the mobile opposition element consists instead of a pair of opposite wedges positioned between the outer wall of the guide and the opposite shelf wall; in correspondence of the point of contact with the wedges, the shelf wall further has corresponding tilted planes. The two wedges are mutually connected by a screw, so that screw rotation in one direction causes mutual drawing closer of the two wedges and consequently moving further apart of the shelf from the corresponding guide, until it determines the engagement of a constraining appendix of the shelf housed within the guide against the undercut portion of the same. The tightening direction of the shelf is hence moving further away from the guide, while the axis of the screw control means is parallel to the guide and hence substantially vertical. An example of such second type of fixing system is disclosed in US-5 293 908.

The first solution illustrated above has the advantage of accomplishing a tightening surface with a remarkable height extension and with a wide contact surface. Stresses are hence more evenly distributed and consequently this fixing system is highly stable. On the other hand, the horizontal direction of the axis of the screw control means causes greater access problems for the operation thereof, a certain slowness in tightening operations and a substantial impossibility to automatise operation thereof due to lack of space in which to house a motor for the rotation thereof.

The second solution satisfyingly overcomes the second problem, since the vertical position of the axis of the control means makes access thereto much easier and makes its automation possible, and besides the presence of the wedges makes tightening quicker. The arrangement of the cooperating fixing surfaces of the shelf and of the respective guide, however, is less satisfying with respect to the previous solution, since these have a reduced contact surface and hence a higher relative concentration of stresses and a lower degree of stability of the fixing itself. Also, although wedge tightening is quicker than the one of the previous solution, this one still has the drawbacks typical of tightening accomplished by screw means, i.e. the need for a specific tool to operate the screw means and the need to operate said tool for at least a few turns both when opening and when closing.

It is hence an object of the present invention to provide an height-adjustable support for a warp yarn deflection cylinder of a weaving loom which overcomes the problems found in known type solutions and which consequently allows highly stable tightening and, at the same time, easy access to the control means and sufficiently quick operation of the same.

A further object of the present invention is also that of providing a control means of a novel type which allows very quick locking and unlocking operations, preferably without using tools.

Such purposes are achieved, according to the present invention, through a support for the warp yarn deflection cylinder of a weaving loom comprising at least two shelves which may be fixed, at an adjustable height, to corresponding guides, formed on the loom shoulders and provided with an undercut of the type comprising one mobile opposition element interacting between each shelf and the corresponding guide and rotating control means to determine the position thereof with respect thereto, the axis of rotation of the corresponding control means is substantially vertical characterised in that said mobile opposition element is arranged at least partly within said undercut guide.

In a first embodiment of the warp yarn deflection cylinder support according to the present invention, the mobile opposition element consists of a pair of opposing wedges, which are displaced by a single screw moving mutually closer/further apart, which operate between the inner portion of the wall of said guide facing the shelf and the wall of a shelf appendix, formed integrally therewith and housed within the guide.

In a second embodiment of the warp yarn deflection cylinder support according to the present invention, the mobile opposition element consists of a T-shaped bracket, whose arm is housed within said guide abutting with the inner portion of the guide wall facing the shelf, and whose arm is operated by the eccentric-shaped portion of a pin fixed to the shelf itself and freely rotatable in respect of the same.

The invention will now be described with reference to some preferred embodiments of the same, illustrated in the accompanying drawings, wherein:

fig. 1 is an exploded axonometric view of the adjustable fixing system of a shelf of the warp yarn deflection cylinder support of a loom, according to a first embodiment of the invention;

fig. 2 is an axonometric view of the shelf of fig. 1 in a mounted condition;

fig. 3 is a plan view of the shelf of fig. 2;

fig. 4 is a cross-section view of said shelf according to line IV-IV of fig. 3;

fig. 5 is an exploded axonometric view of the adjustable fixing system of a shelf of the warp yarn deflection cylinder support of a loom, according to a second embodiment of the invention;

fig. 6 is an axonometric view of the shelf of fig. 5 in a mounted condition;

fig. 7 is a plan view of the shelf of fig. 2; and

fig. 8 is a cross-section view of said shelf according to line VIII-VIII of fig. 7.

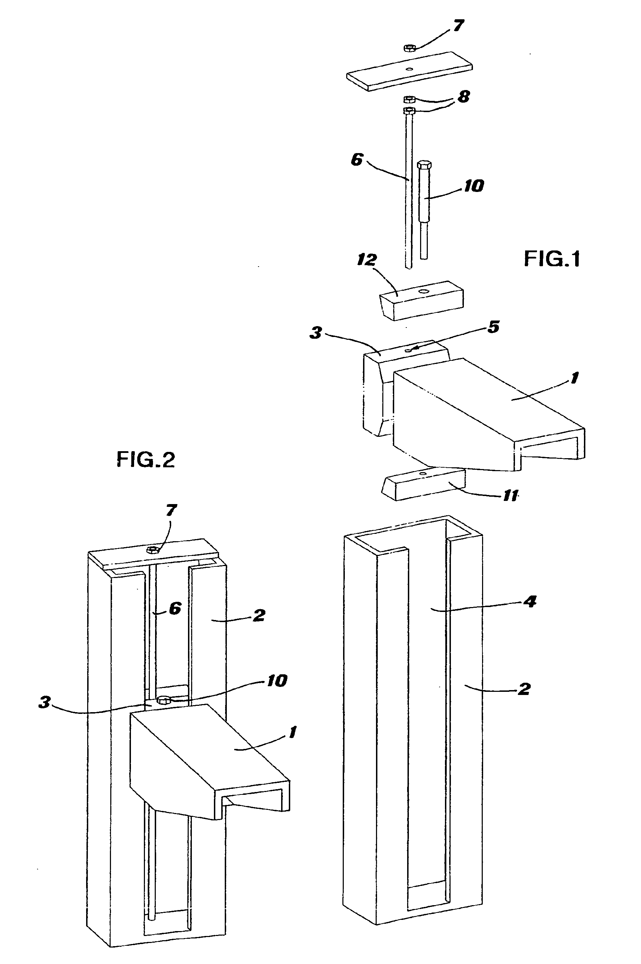

Figs. 1 and 2 illustrate a first embodiment of the height-adjustable fixing system of a shelf 1 - intended to form, alongside one or more other similar shelves, possibly mutually connected by crossbars, a support for a warp yarn deflection cylinder
- to a guide 2 which is integral, in a manner known per se, with a shoulder of a weaving loom not shown in the drawings. Guide 2 normally has a C-shaped cross-section, so as to form two undercut areas in the inner cavity 4 of the guide.

At the back, shelf 1 comprises a T-shaped appendix 3, formed integrally therewith, whose dimensions are such that it can be introduced from above in cavity 4 of guide 2 substantially occupying the entire width thereof, however with such a slack that it can freely slide therein.

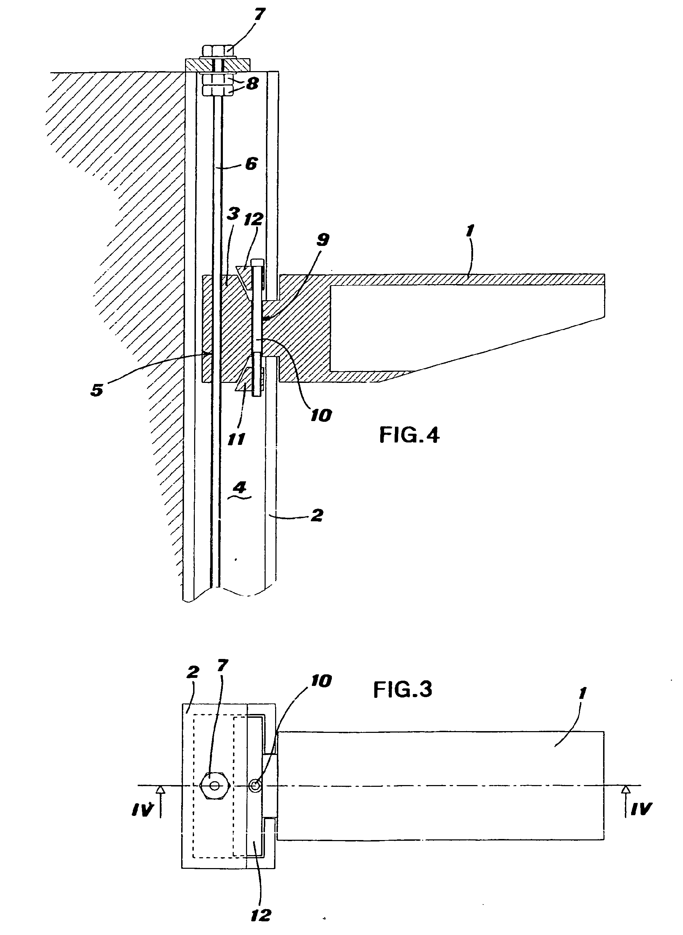

As can be seen better in fig. 4, said appendix 3 has, in a central position of its highest portion, an entirely threaded vertical hole 5 with which a long screw 6 engages, which can be actuated in rotation by means of its nut-shaped head 7, and locked in position by a pair of nuts 8.

Appendix 3 further has, in a central position of its shortest portion, a second unthreaded vertical hole 9 wherein a bottom-threaded screw 10 is housed with slack which cooperates, in a manner known per se, with a pair of wedges 11 and 12, shaped so as to match with the opposing surfaces of appendix 3 and of the inner wall of guide 2. For this purpose, wedges 11 and 12 have holes allowing through screw 10, only the hole of wedge 11 being threaded, so that tightening of screw 10 determines the mutual coming together of the two wedges and viceversa, said wedges thereby being the mobile opposition element for the tightening of shelf 1 against guide 2.

Adjustment in position, at the desired height, of shelf 1 and consequently of the warp yarn deflection cylinder support is hence easily accomplished: once T-shaped appendix 3 has been introduced in groove 4 of guide 2, screw 6 is operated so as to bring shelf 1 to the desired height. When shelf 1 has reached the chosen working position, it is tightened against guide 2 simply by tightening screw 10. By doing so, as a matter of fact, the mutual moving closer of the two wedges 11 and 12 is accomplished and consequently the horizontal displacement of shelf 1 moving closer to the open wall of guide 2, until it abuts against the same, accomplishing the desired tightening.

According to the desired object, tightening is accomplished by placing the entire extension of the vertical wall of shelf 1 in contact with the opposing wall of guide 2, which tightening is hence particularly stable, also with respect to flexural stresses. The control axis of the mobile opposition element formed by the two wedges 11 and 12, i.e. the axis of screw 10, is further parallel to guide 2 and hence substantially vertical, granting easier access thereto and allowing for an easier possible automation thereof.

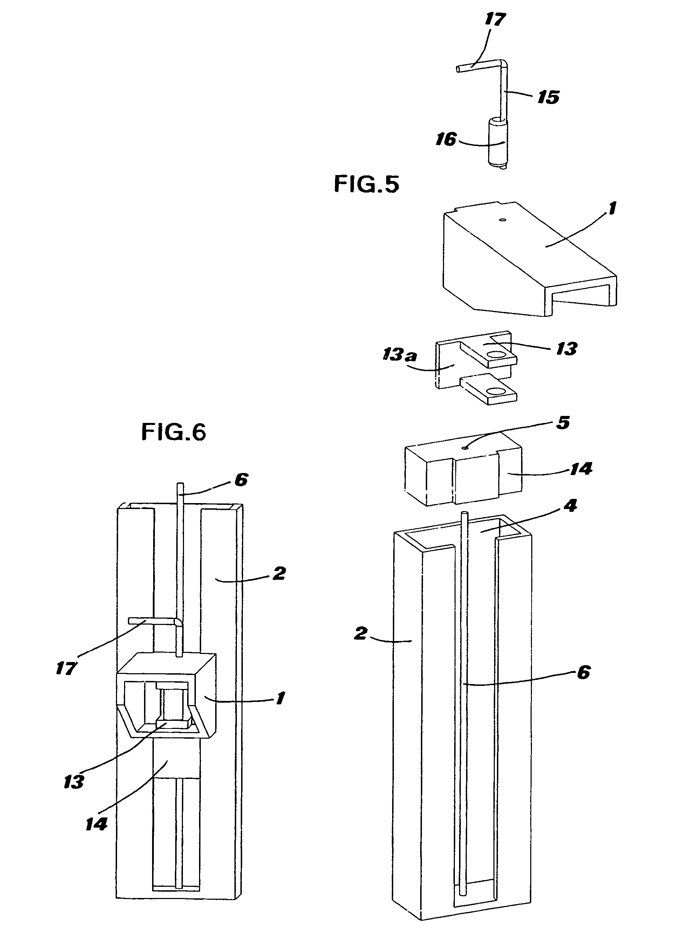

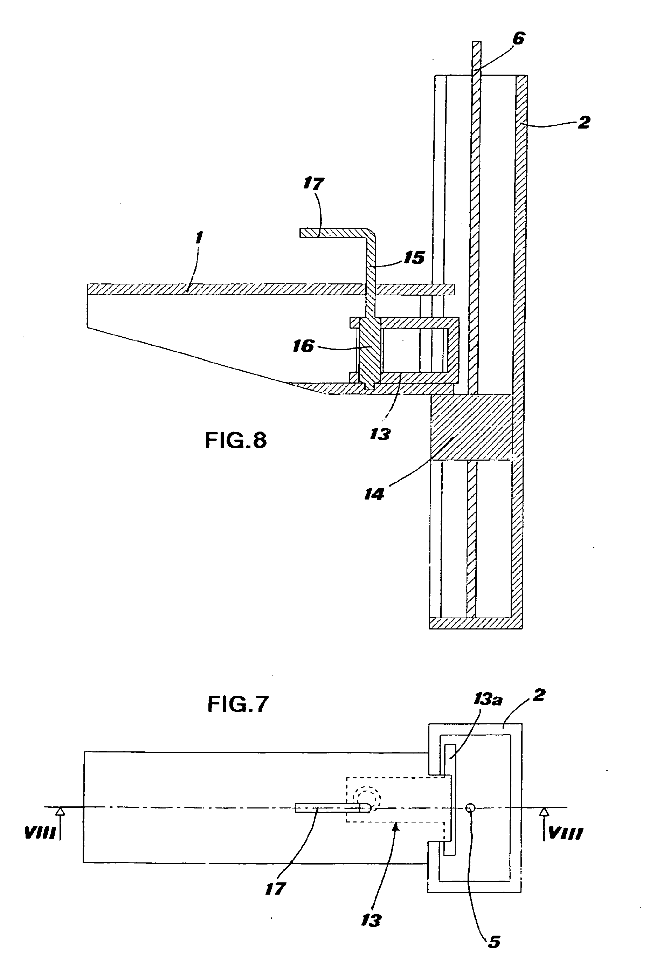

In an alternative embodiment, illustrated in figs. 5 to 8, it is provided that shelf 1 - with no appendix and comprising instead a double T-shaped bracket 13, freely housed within it and apt to cooperate with T-arm 13a (fig. 7) against the undercut areas of guide 2 - rests on a small plinth 14 housed within cavity 4 of guide 2. Plinth 14 substantially occupies the entire width of cavity 4, however with such a slack that allows it to slide freely therein. It further has a fully threaded vertical hole 5 which a long screw 6 engages with, which can be actuated in a fully identical way to what has been described for the first embodiment, to thereby determine displacement of plinth 14, and consequently the one of shelf 1 resting thereon, at a chosen height along guide 2.

The device is complemented by a pin 15, equipped with an eccentric portion 16 having a widened diameter and provided with a manoeuvring lever 17 at the upper end thereof. As can be clearly seen in fig. 8, pin 15 is introduced, freely pivoting, in corresponding holes provided in the two opposing horizontal walls of shelf 1, whereas eccentric portion 16 having a widened diameter is housed, itself freely pivoting, in corresponding holes provided in the two parallel plates forming the double T-shaped bracket 13.

The height-adjustable shelf assembly thereby accomplished is stable and supports the warp yarn deflection cylinder load thanks to the reaction produced by wing 13a of double bracket 13 on the inner wall of guide 2.

To accomplish tightening of the device, once shelf 1 has been arranged in the desired position, it is sufficient to rotate lever 17 by less than 180° to determine - thanks to the action of eccentric portion 16 of pin 15 on the corresponding holes provided in the two parallel plates forming double bracket 13 - the horizontal displacement of shelf 1 closer to the outer wall of guide 2 until it abuts with the same, whereas arm 13a of the double T-shaped bracket 13 simultaneously abuts with the inner wall of guide 2, thereby accomplishing the desired tightening.

An easy-to-use, adjustable-height shelf has thereby been provided for a warp yarn deflection cylinder of a weaving loom, wherein fixing and unfixing operations further occur virtually instantaneously and without using any tool, thanks to the rotation by less than half a turn of pin 15. A warp yarn deflection cylinder support according to this embodiment consequently also achieves the further object of the invention and is further particularly suitable for automation, by using electric or pneumatic actuators to actuate pins 15, for the purpose of accomplishing fixing/unfixing of the shelves, and to operate screws 6 to determine the displacement of shelves 1 to the desired height.

Although the warp yarn deflection cylinder support of the present invention has been described and illustrated with reference to two specific embodiments, the scope of protection of the invention must not to be considered limited thereto, but comprises instead any possible variant within the reach of a person skilled in the art, provided it falls into the definitions of the invention provided in the accompanying claims.

## Claims

1. Support for a warp yarn deflection cylinder of a weaving loom comprising at least two shelves (1) which can be fixed, at an adjustable height, to respective guides (2) formed on the loom shoulders and provided with an undercut, of the type comprising a mobile opposition element interacting between each shelf (1) and the corresponding guide (2) and rotating control means to determine the position in respect thereof, the axis of rotation of the corresponding control means is substantially vertical **characterised in that** said mobile opposition element is at least partly arranged within said undercut guide (2).

2. Support as in claim 1), wherein the mobile opposition element consists of a pair of opposing wedges (11, 12) which operate between the inner portion of the wall of said guide (2) facing the shelf and the wall of a T-shaped appendix (3) of the shelf (1) housed within the guide and movable therein.

3. Support as in claim 2), wherein the control means of said pair of wedges (11, 12) consist of a single screw (10) which engages with said wedges so as to allow them to move mutually closer/further apart by rotating the screw in one or the opposite direction.

4. Support as in claim 2), wherein said T-shaped appendix (3) is formed integrally with said shelf (1) and is coupled with a worm screw (6) to adjust the height position of said shelf (1).

5. Support as in claim 1), wherein the mobile opposition element consists of a T-shaped bracket (13), the arm (13a) of the T is housed within said guide (2) abutting with the inner portion of the guide wall facing the shelf (1), and the arm of the T is housed within said shelf and cooperates by roto-translating with the eccentric portion (16) of a pin (15) fixed to the shelf and freely pivoting in respect of the same.

6. Support as in claim 5), wherein the arm of the T-shaped bracket (13) consists of a pair of parallel plates equipped with aligned holes wherein the eccentric portion (16) of said pin (15) is housed in a freely pivoting manner.

7. Support as in claim 5) or 6), wherein said shelf rests on a plinth (14) movably housed within said guide (2), and the plinth is coupled with a worm screw (6) to adjust the height position of said shelf.

8. Support as in any one of claims 5) to 7), wherein the rotation of said pin (15) is accomplished by means of a manually operated manoeuvring lever.

9. Support as in any one of claims 5) to 7), wherein rotation of said pin (15) and of said worm screw (6) is accomplished through automatically-operated electrical or pneumatic actuators.

## Patentansprüche

1. Halterung für einen Brustbaum einer Webmaschine, mit wenigstens zwei Borden (1), die in einer einstellbaren Höhe an jeweiligen Führungen (2) befestigt sind, die auf den Schultern der Maschine gebildet und mit einer Hinterschneidung versehen sind, des Typs, der ein bewegliches Gegenelement, das zwischen jedem Bord (1) und der entsprechenden Führung (2) wirkt, und eine Drehsteuereinrichtung, um die Position in bezug darauf zu bestimmen, aufweist, wobei die Drehachse der entsprechenden Steuereinrichtung im wesentlichen vertikal ist, **dadurch gekennzeichnet, daß** das bewegliche Gegenelement wenigstens teilweise innerhalb der hinterschnittenen Führung (2) angeordnet ist.

2. Halterung nach Anspruch 1, bei der das bewegliche Gegenelement aus einem Paar gegenüberstehender Keile (11, 12) besteht, die zwischen dem inneren Teil der Wand der Führung (2), die dem Bord zu gewandt ist, und der Wand eines T-förmigen Fortsatzes (3) des Bords (1), der innerhalb der Führung untergebracht und darin bewegbar ist, wirken.

3. Halterung nach Anspruch 2, bei der die Steuereinrichtung des Paares Keile (11, 12) aus einer einzigen Schraube (10) besteht, die im Eingriff mit den Keilen ist, um es ihnen so zu ermöglichen, sich wechselweise näher aufeinander zu/weiter voneinander weg zu bewegen, indem die Schraube in eine oder in die entgegengesetzte Richtung gedreht wird.

4. Halterung nach Anspruch 2, bei der der T-förmige Fortsatz (3) einstückig mit dem Bord (1) ausgebildet ist und mit einer Schneckenschraube (6) gekoppelt ist, um die Höhenposition des Bordes (1) einzustellen.

5. Halterung nach Anspruch 1, bei der das bewegliche Gegenelement aus einem T-förznigen Ausleger (13) besteht, wobei der Arm (13a) des T innerhalb der Führung in Anlage an den inneren Teil der Führungswand, die dem Bord (1) zugewandt ist, untergebracht ist und der Arm des T innerhalb des Bordes untergebracht ist und durch Drehverschiebung mit dem exzentrischen Teil (16) eines Stiftes (15) zusammenwirkt, der an dem Bord befestigt und in bezug auf dasselbe frei verschwenkbar ist.

6. Halterung nach Anspruch 5, bei der der Arm des T-förmigen Auslegers (13) aus einem Paar paralleler Platten besteht, die mit ausgerichteten Löchern ausgestattet sind, in denen der exzentrische Teil (16) des Stiftes (15) frei verschwenkbar angeordnet ist.

7. Halterung nach Anspruch 5 oder 6, bei der das Bord auf einem Sockel (14) ruht, der bewegbar innerhalb der Führung (2) untergebracht ist und der Sockel mit einer Schneckenschraube (6) gekoppelt ist, um die Höhenposition des Bordes einzustellen.

8. Halterung nach einem der Ansprüche 5 bis 7, bei der die Drehung des Stiftes (15) mittels eines von Hand betriebenen Manövrierhebels bewerkstelligt wird.

9. Halterung nach einem der Ansprüche 5 bis 7, bei der die Drehung des Stiftes (15) und der Schneckenschraube (6) durch automatisch betriebene elektrische oder pneumatische Antriebe bewerkstelligt wird.

## Revendications

1. Support pour un cylindre de déviation de fil de chaîne d'un métier à tisser comportant au moins deux consoles (1) qui peuvent être fixées, à une hauteur réglable, à des guides respectifs (2) formés sur les épaulements du métier et pourvues d'une contre-dépouille, du type comportant un élément mobile d'opposition interagissant entre chaque console (1) et le guide correspondant (2) et un moyen de commande de rotation pour déterminer la position par rapport à eux, l'axe de rotation du moyen de commande correspondant étant sensiblement vertical, **caractérisé en ce que** ledit élément mobile d'opposition est agencé au moins partiellement dans ledit guide (2) à contre-dépouille.

2. Support selon la revendication 1, dans lequel l'élément mobile d'opposition est constitué de deux coins opposés (11, 12) qui interviennent entre la partie intérieure de la paroi dudit guide (2) faisant face à la console et la paroi d'un appendice (3) en forme de T de la console (1) logé et mobile à l'intérieur du guide.

3. Support selon la revendication 2, dans lequel le moyen de commande de ladite paire de coins (11, 12) consiste en une vis unique (10) qui est en prise avec lesdits coins afin de leur permettre de se rapprocher/s'écarter mutuellement par une rotation de la vis dans un sens ou dans le sens opposé.

4. Support selon la revendication 2, dans lequel ledit appendice (3) en forme de T est formé d'une seule pièce avec ladite console (1) et est accouplé à une vis sans fin (6) pour régler la position en hauteur de ladite console (1).

5. Support selon la revendication 1, dans lequel l'élément mobile d'opposition est constitué d'une chape (13) en forme de T, la branche (13a) du T est logée à l'intérieur dudit guide (2) en appui sur la partie intérieure de la paroi du guide faisant face à la console (1), et la branche du T est logée à l'intérieur de ladite console et coopère par roto-tranelation avec la partie excentrique (16) d'une broche (15) fixée à la console et pivotant librement par rapport à celle-ci.

6. Support selon la revendication 5, dans lequel la branche de la chape (13) en forme de T est constituée de deux plaques parallèles équipées de trous alignés dans lesquels la partie excentrique (16) de ladite broche (15) est logée de manière à pivoter librement.

7. Support selon la revendication 5 ou 6, dans lequel ladite console repose sur une plinte (14) logée de façon mobile à l'intérieur dudit guide (2), et la plinte est accouplée à une vis sans fin (6) pour régler la position en hauteur de ladite console.

8. Support selon l'une quelconque des revendications 5 à 7, dans lequel la rotation de ladite broche est réalisée au moyen d'un levier de manoeuvre actionné à la main.

9. Support selon l'une quelconque des revendications 5 à 7, dans lequel la rotation de ladite broche (15) et de ladite distance sans fin (6) est réalisée au moyen d'actionneurs électriques ou pneumatiques, commandés automatiquement.
